# EUROPEAN PATENT APPLICATION

(11) **EP 2 275 325 A2**
(43) Date of publication of application: **19.01.2011**
(21) Application number: 10169870.2
(22) Date of filing: 16.07.2010
(51) Int. Cl.: B62D 55/21

(54) **Segmented or other elastomeric endless track for traction of a vehicle**

(30) Priority: 17.07.2009 US 226463 P
(71) Applicant: Camoplast Inc., Sherbrooke, Quebec J1J 2E8 (CA)
(72) Inventor: Delisle, Marc, Magog Québec J1X 1M3 (CA); Gingras, David, Magog Québec J1X 3W3 (CA)
(74) Representative: Kling, Simone

(57) **Abstract**

An endless track (16₁,16₂) for traction of a vehicle (10), such as a construction vehicle, an agricultural vehicle, a forestry vehicle or a military vehicle. In one embodiment, the endless track comprises a plurality of track sections (50₁-50₁₀) connected to one another. Each track section comprises: a body having an inner side (52) for facing wheels of the vehicle and a ground-engaging outer side (54) for engaging the ground; and a connector for connecting the track section to an adjacent one of the track sections at a joint (48₁-48₁₀), the joint being flexible in a widthwise direction of the endless track.

## Description

### FIELD OF THE INVENTION

The invention relates to endless tracks for traction of vehicles operable in off-road conditions.

### BACKGROUND

Certain vehicles, such as construction vehicles (e.g., loaders, bulldozers, excavators, etc.), agricultural vehicles (e.g., harvesters, combines, tractors, etc.) forestry vehicles (e.g., feller-bunchers, tree chippers, knuckleboom loaders, etc.) and military vehicles (e.g., combat engineering vehicles (CEVs), etc.) to name a few, may be equipped with endless tracks which enhance their traction and floatation on soft, slippery and/or uneven grounds (e.g., soil, mud, sand, ice, snow, etc.) on which they operate.

In some situations, it may be useful or necessary to quickly and conveniently install an endless track on a vehicle or remove and/or replace part of an endless track already installed on a vehicle. However, such rapidity and convenience should not detrimentally affect the track's performance.

For these and other situations, there is a need to improve endless tracks for traction of vehicles.

### SUMMARY OF THE INVENTION

According to one broad aspect, the invention provides an endless track for traction of a vehicle. The vehicle comprises a plurality of wheels. The endless track comprises a plurality of track sections connected to one another. Each track section comprises: a) a body having: an inner side for facing the wheels; and a ground-engaging outer side for engaging the ground; and b) a connector for connecting the track section to an adjacent one of the track sections at a joint, the joint being flexible in a widthwise direction of the endless track.

According to another broad aspect, the invention provides a track section for making an endless track for traction of a vehicle. The vehicle comprises a plurality of wheels. The endless track comprises a plurality of track sections, including the track section, which are connected to one another. The track section comprises: a) a body having an inner side for facing the wheels and a ground-engaging outer side for engaging the ground; and b) a connector for connecting the track section to an adjacent one of the track sections at a joint, the joint being flexible in a widthwise direction of the endless track.

According to another broad aspect, the invention provides an endless track for traction of a vehicle. The vehicle comprises a plurality of wheels. The endless track comprises: a) an inner side for facing the wheels; b) a ground-engaging outer side for engaging the ground; and c) a first connector and a second connector connectable to one another at a joint when the endless track is closed, the first connector and the second connector allowing the joint to be flexible in a widthwise direction of the endless track.

According to another broad aspect, the invention provides an endless track for traction of a vehicle. The vehicle comprises a plurality of wheels, each of the wheels having a tire. The endless track is mountable over the tire of each of the wheels. The endless track comprises a plurality of track sections connected to one another. Each track section comprises: a) an elastomeric body having an inner side for facing the wheels and a ground-engaging outer side for engaging the ground; b) a plurality of elastomeric wheel-contacting projections on the inner side for contacting at least one of the wheels, the elastomeric wheel-contacting projections being spaced apart in a longitudinal direction of the endless track; and c) a connector for connecting the track section to an adjacent one of the track sections at a joint.

According to another broad aspect, the invention provides an endless track for traction of a vehicle. The vehicle comprises a plurality of wheels. The endless track comprises a plurality of track sections connected to one another. Each track section comprises: a) an elastomeric body having an inner side for facing the wheels and a ground-engaging outer side for engaging the ground; b) a plurality of elastomeric wheel-contacting projections on the inner side for contacting at least one of the wheels, the elastomeric wheel-contacting projections being spaced apart in a longitudinal direction of the endless track; and c) a connector for connecting the track section to an adjacent one of the track sections at a joint.

These and other aspects of the invention will now become apparent to those of ordinary skill in the art upon review of the following description of embodiments of the invention in conjunction with the accompanying drawings.

### BRIEF DESCRIPTION OF THE DRAWINGS

A detailed description of embodiments of the invention is provided below, by way of example only, with reference to the accompanying drawings, in which:
Figure 1 shows a vehicle in accordance with an embodiment of the invention;
Figure 2 shows a perspective view of an endless track of the vehicle;
Figure 3 shows a perspective view of a track section of a plurality of track sections of the endless track that are interconnected;
Figures 4 to 7 respectively show a top view, a side elevation view, a front elevation view, and a cross-sectional view of the track section;
Figures 8A and 8B respectively show a partial cross-sectional side elevation view and a partial cross-sectional front view of a guide projection of the track section;
Figures 9A to 9D show examples of other configurations of an internal space of the guide projection in other embodiments;
Figure 10 shows two (2) connectors of the track section coupled to a reinforcement of the track section;
Figures 11A to 11C show a perspective view, a top view and a perspective sectional view of one of a plurality of connection members of one of the connectors;
Figure 12 shows an elongated interlinking member for interlinking adjacent ones of the track sections;
Figures 13 and 14 show an embodiment of a mold used in an example of a process for manufacturing the track sections of the endless track;
Figures 15 and 16 respectively show a top view and a cross-sectional view of a track section in accordance with another embodiment of the invention;
Figures 17 and 18 show an endless track in accordance with another embodiment of the invention, when the endless track is in a closed state and an open state, respectively; and
Figure 19 shows a vehicle in accordance with another embodiment of the invention.

It is to be expressly understood that the description and drawings are only for the purpose of illustrating certain embodiments of the invention and are an aid for understanding. They are not intended to be a definition of the limits of the invention.

### DETAILED DESCRIPTION OF EMBODIMENTS

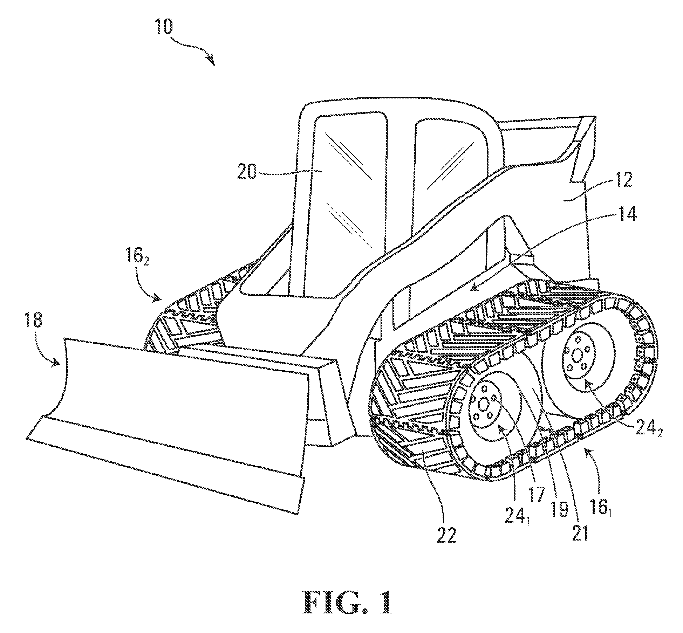

Figure 1 shows a vehicle 10 in accordance with an embodiment of the invention. In this embodiment, the vehicle 10 is a construction vehicle for performing construction work. More specifically, in this example, the construction vehicle 10 is a skid steer loader. In other examples, the construction vehicle 10 may be a backhoe loader, a bulldozer, or any other type of construction vehicle.

The construction vehicle 10 comprises a frame 12 supporting a prime mover 14, a pair of track assemblies 16₁, 16₂, a working implement 18, and an operator cabin 20, which enable an operator to move the construction vehicle 10 on the ground to perform construction work.

The prime mover 14 provides motive power to move the construction vehicle 10. For example, the prime mover 14 may comprise an internal combustion engine and/or one or more other types of motors (e.g., electric motors, etc.) for generating motive power to move the construction vehicle 10. The prime mover 14 is in a driving relationship with each of the track assemblies 16₁, 16₂. That is, power derived from the prime mover 14 is transmitted to the track assemblies 16₁, 16₂ via a powertrain of the construction vehicle 10.

The working implement 18 is used to perform construction work. In this embodiment, the working implement 18 is a dozer blade that can be used to push objects and shove soil, debris or other material. In other embodiments, the working implement 18 may take on various other forms, such as a bucket, a backhoe, a fork, a grapple, a scraper pan, an auger, a saw, a ripper, a material handling arm, or any other type of construction working implement.

The operator cabin 20 is where the operator sits and controls the construction vehicle 10. More particularly, the operator cabin 20 comprises a set of controls that allow the operator to steer the construction vehicle 10 on the ground and operate the working implement 18.

The track assemblies 16₁, 16₂ propel the construction vehicle 10 on the ground. More particularly, in this embodiment, each track assembly 16ᵢ comprises an endless track 22 mounted around two (2) drive wheels 24₁, 24₂.

Each of the drive wheels 24₁, 24₂ is rotatable by power produced by the prime mover 14 for driving the endless track 22 to propel the construction vehicle 10 on the ground. In this embodiment, each of the drive wheels 24₁, 24₂ comprises a hub 17, a rim 19, and a tire 21. The tire 21 may be pneumatic or solid, may be made of rubber and/or other materials (e.g., metals, plastics, or composites), and may be of various types (e.g., an off-the-road (OTR) tire).

The endless track 22 engages the ground to provide traction to the construction vehicle 10. More particularly, in this embodiment, as the drive wheels 24₁, 24₂ are rotated by power produced by the prime mover 14, friction between the tire 21 of each of the drive wheels 24₁, 24₂ and the endless track 22 imparts motion to the endless track 22 for traction of the construction vehicle 10 on the ground.

Since in this embodiment it is mounted over the tire 21 of each of the drive wheels 24₁, 24₂, the endless track 22 can be referred to as an "over-the-tire" (OTT) track. Basically, in this embodiment, without the endless track 22, the construction vehicle 10 may be operated as a wheeled vehicle in which the drive wheels 24₁, 24₂ engage and roll on the ground to propel the construction vehicle 10 (e.g., the construction vehicle 10 may have been initially designed and manufactured to move by way of the wheels 24₁, 24₂ rolling on the ground). The endless track 22 is installable over the drive wheels 24₁, 24₂ to convert the construction vehicle 10 into a tracked vehicle, thereby enhancing traction and floatation of the construction vehicle 10 on the ground.

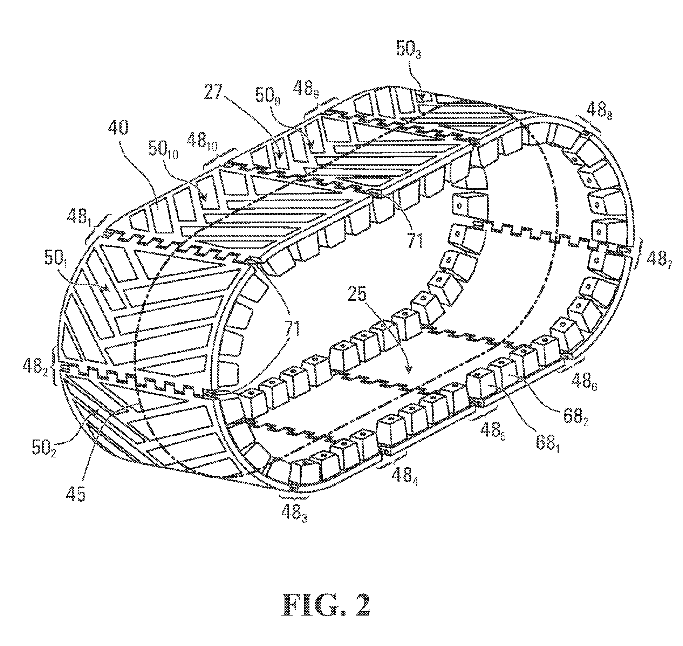

With additional reference to Figure 2, the endless track 22 comprises an inner side 25 and a ground-engaging outer side 27. The inner side 25 faces the drive wheels 24₁, 24₂ and defines an inner area in which these wheels rotate. The ground-engaging outer side 27 engages the ground on which the construction vehicle 10 travels and comprises a tread pattern 40 to enhance traction of the construction vehicle 10 on the ground. The endless track 22 has a longitudinal axis 45 defining a longitudinal direction of the endless track 22 (i.e., a direction generally parallel to the longitudinal axis 45) and transversal directions of the endless track 22 (i.e., directions transverse to the longitudinal axis 45) including a widthwise direction of the endless track 22 (i.e., a lateral direction generally perpendicular to the longitudinal axis 45).

In this embodiment, the endless track 22 comprises a plurality of track sections 50₁-50₁₀ connected to one another. The track sections 50₁-50₁₀ are interconnected at a plurality of joints 48₁-48₁₀ to form a closed track. With its track sections 50₁-50₁₀, the endless track 22, which can be referred to as a "segmented track", can be conveniently installed on the construction vehicle 10 and/or can facilitate replacement or repair of one or more of these sections.

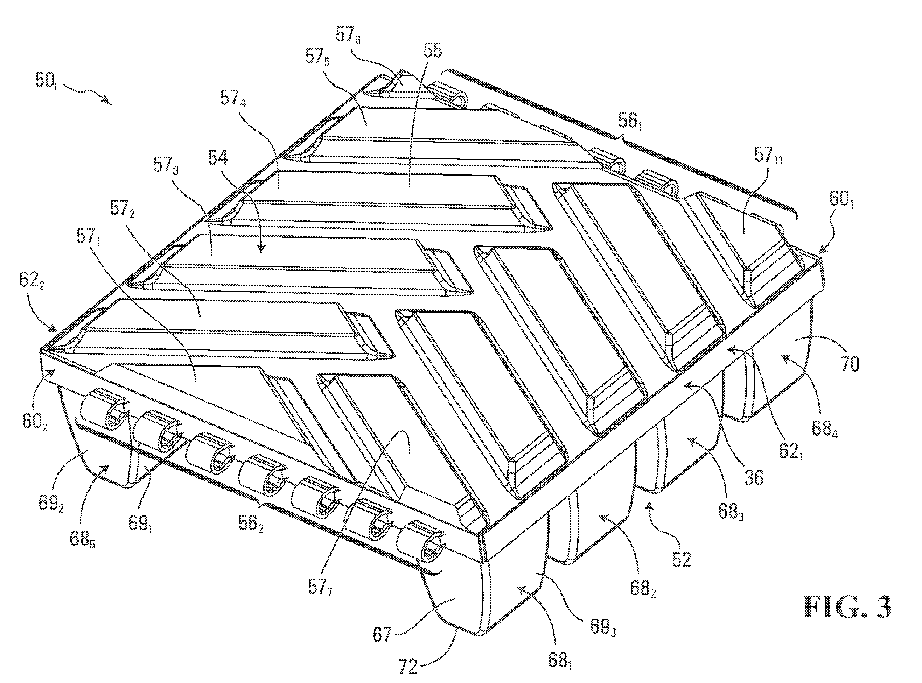

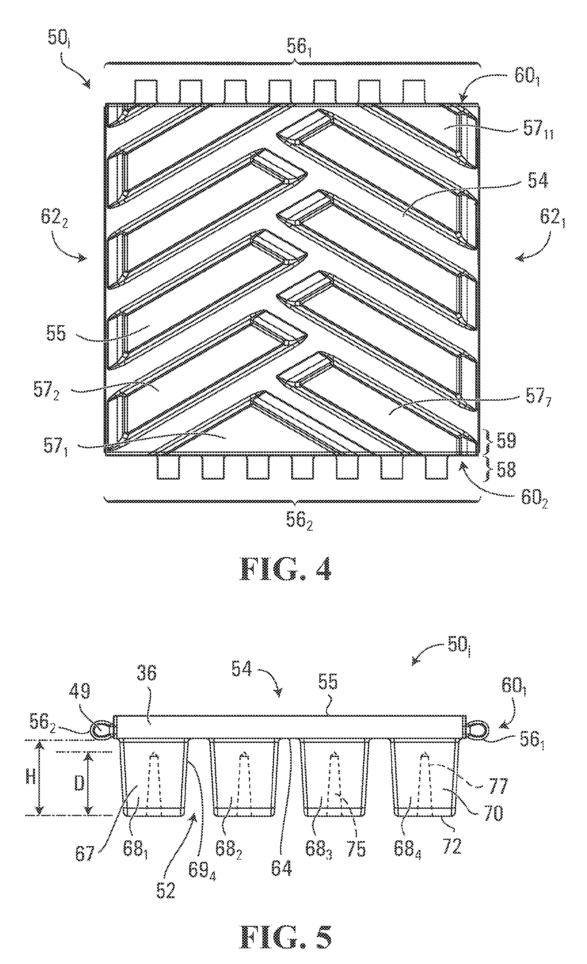

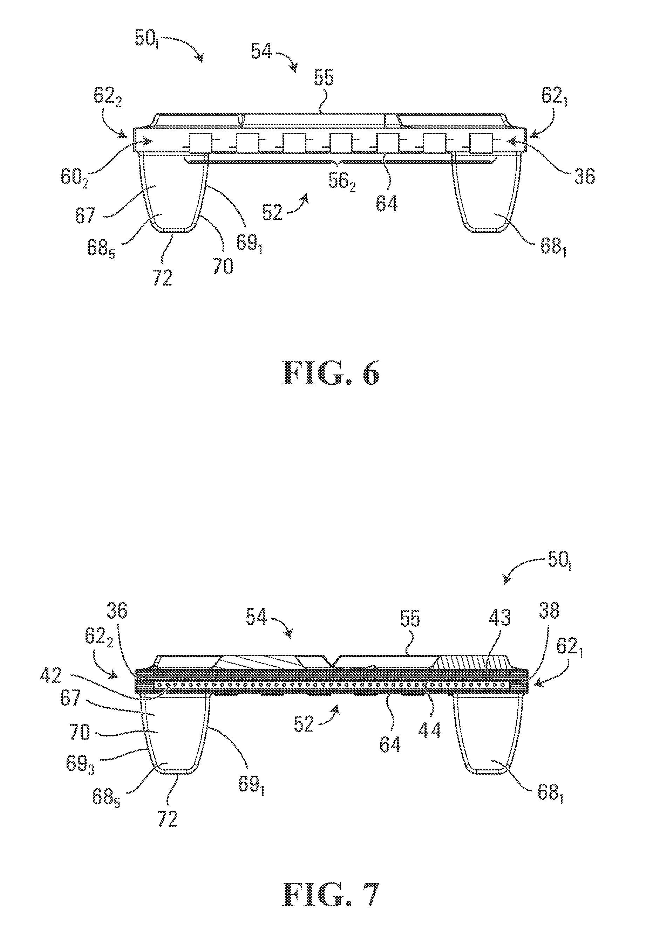

Referring additionally to Figures 3 to 7, each track section 50ᵢ comprises an inner side 52, a ground-engaging outer side 54, a front edge 60₁, a rear edge 60₂, and two (2) lateral edges 62₁, 62₂. The track section 50ᵢ also comprises two (2) connectors 56₁, 56₂ for connecting the track section 50ᵢ to adjacent ones of the track sections 50₁-50₁₀, namely the track sections 52ᵢ₋₁, 52ᵢ₊₁.

The track section 50ᵢ comprises an elastomeric body 36 underlying the inner side 52 and the ground-engaging outer side 54. In view of its underlying nature, the elastomeric body 36 can be referred to as a "carcass". The carcass 36 is elastomeric in that it comprises elastomeric material 38. In this case, a plurality of components, including the connectors 56₁, 56₂ and a plurality of reinforcements 42, 43, 44, 47, are embedded in the elastomeric material 38.

The elastomeric material 38 allows the carcass 36 to elastically change in shape as the endless track 22 is driven by the driving wheels 24₁, 24₂. The elastomeric material 38 can be any polymeric material with suitable elasticity. In this embodiment, the elastomeric material 38 includes rubber. Various rubber compounds may be used and, in some cases, different rubber compounds may be present in different areas of the carcass 36. In other embodiments, the elastomeric material 38 may include another elastomer in addition to or instead of rubber (e.g., polyurethane elastomer).

The reinforcement 42 comprises a plurality of reinforcing cables 37₁-37₄₅ adjacent to one another. The reinforcing cables 37₁-37₄₅ extend generally in the longitudinal direction of the endless track 22 to enhance strength in tension of the track section 50ᵢ along the longitudinal direction of the endless track 22. In this embodiment, each of the reinforcing cables 37₁-37₄₅ is a cord or wire rope including a plurality of strands or wires. In other embodiments, each of the reinforcing cables 37₁-37₄₅ may be another type of cable and may be made of any material suitably flexible longitudinally (e.g., fibers or wires of metal, plastic or composite material).

Each of the reinforcements 43, 44, 47 may comprise a layer of reinforcing cables or a layer of reinforcing fabric. The reinforcing cables may be cords or wire ropes including a plurality of strands or wires (e.g., of metal, plastic or composite material). Reinforcing fabric comprises pliable material made usually by weaving, felting, or knitting natural or synthetic fibers. For example, a layer of reinforcing fabric may comprise a ply of reinforcing woven fibers (e.g., nylon fibers or other synthetic fibers).

The ground-engaging outer side 54 of the track section 50ᵢ engages the ground on which the construction vehicle 10 travels. In this embodiment, the ground-engaging outer side 54 comprises a tread pattern 55 to enhance traction on the ground. The tread pattern 55 comprises a plurality of traction projections 57₁-57₁₁ (sometimes referred to as "traction lugs" or "tread members") distributed on the ground-engaging outer side 54. In this example, each of the traction projections 57₂-57₅, 57₇-57₁₀ has an elongated shape and is angled (i.e., defines an acute angle θ) relative to the longitudinal direction of the endless track 22. Each of the traction projections 57₁, 57₆, 57₁₁ has a different shape in view of its position near one of the edges 60₁, 60₂. The traction projections 57₁-57₁₁ may have various other shapes in other examples (e.g., curved shapes, shapes with straight parts and curved parts, etc.). Collectively, the ground-engaging outer sides 54 of the track sections 50₁-50₁₀ form the ground-engaging outer side 27 of the endless track 22.

In order to make the tread pattern 40 of the endless track 22 as "seamless" as possible, in some embodiments, the tread pattern 55 of the track section 50ᵢ may complement the tread pattern 55 of each of the adjacent track sections 52ᵢ₋₁, 52ᵢ₊₁ such that these three (3) tread patterns 55 form a "continuous" tread pattern. Specifically, each of the traction projections 57ᵢ-57₁₁ that extends to or from one of the edges 60₁, 60₂ of the track section 50ᵢ may form an "extension" of one of the traction projections 57₁-57₁₁ of the adjacent track section 52ᵢ₋₁ or 52ᵢ₊₁. For example, in some embodiments: the traction projection 57₁ that reaches the rear edge 60₂ of the track section 50ᵢ may be modified such that it complements the traction projection 57₆ that reaches the front edge 60₁ of the track section 50ᵢ₋₁ to form a continuous traction projection; the traction projection 57₁₁ that reaches the front edge 60₁ of the track section 50ᵢ may complement the traction projection 57₇ that reaches the rear edge 60₂ of the track section 50ᵢ₊₁ to form a continuous traction projection; and so on.

In this embodiment, each of the traction projections 57ᵢ-57₁₁ is an elastomeric traction projection that comprises elastomeric material 41. The elastomeric material 41 can be any polymeric material with suitable elasticity. More particularly, in this embodiment, the elastomeric material 41 includes rubber. Various rubber compounds may be used and, in some cases, different rubber compounds may be present in different areas of each of the traction projections 57₁-57₁₁. In other embodiments, the elastomeric material 41 may include another elastomer in addition to or instead of rubber (e.g., polyurethane elastomer).

The inner side 52 of the track section 50ᵢ contacts the drive wheels 24₁, 24₂ of the construction vehicle 10. More particularly, in this embodiment, the inner side 52 comprises a rolling surface 64 and a plurality of wheel-contacting projections 68₁-68₈.

The rolling surface 64 is that on which roll the drive wheels 24₁, 24₂. In this embodiment, the rolling surface 64 is generally smooth. In other embodiments, the rolling surface 64 may comprise a friction-enhancing pattern (e.g., a pattern of ridges and/or recesses) to enhance friction between the track section 52ᵢ and the drive wheels 24₁, 24₂ as they rotate.

The wheel-contacting projections 68₁-68₈ contact the drive wheels 24₁, 24₂ and are used to do at least one of driving (i.e., imparting motion to) the track 22 and guiding the track 22. In that sense, the wheel-contacting projections 68₁-68₈ can be referred to as "drive/guide projections", meaning that each drive/guide projection is used to do at least one of driving the track 22 and guiding the track 22. Also, such drive/guide projections are sometimes referred to as "drive/guide lugs". The wheel-contacting projections 68₁-68₈ are spaced apart in the longitudinal direction of the track section 50ⱼ. In this case, respective ones of the wheel-contacting projections 68₁-68₈ are also spaced apart in the widthwise direction of the track section 50ᵢ.

More particularly, in this embodiment, the wheel-contacting projections 68₁-68₈ are guide projections that guide the track section 50ᵢ as the drive wheels 24₁, 24₂ rotate and drive the endless track 22. In this case, the guide projections 68₁-68₈ the guide projections 68₁-68₈ are arranged in two (2) rows adjacent to respective ones of the lateral edges 62₁, 62₂ of the track section 50ᵢ. The first row includes the guide projections 68₁-68₄ and is adjacent to the lateral edge 62₁, while the second row includes the guide projections 68₅-68₈ and is adjacent to the lateral edge 62₂.

Each guide projection 68ₖ has a periphery 70. In this embodiment, the periphery 70 includes a top surface 72 and four (4) side surfaces 69₁-69₄, with the side surface 69₁ being a wheel-facing surface that faces the drive wheels 24₁, 24₂ as the endless track 22 is in motion. In this example, the rows in which are arranged the guide projections 68₁-68₈ are spaced apart along the widthwise direction of the endless track 22 by a distance generally corresponding to a width of the drive wheels 24₁, 24₂. In other examples, the rows in which are arranged the guide projections 68₁-68₈ may be spaced apart along the widthwise direction of the endless track 22 by a distance such that, when the drive wheels 24₁, 24₂ rotate, the wheel-facing surface 69₁ of each guide projection 68ᵢ engages the drive wheels 24₁, 24₂ to exert a clamping force on the drive wheels 24₁, 24₂ which contributes to transferring motion from the drive wheels 24₁, 24₂ to the endless track 22. In such examples, the guide projections 68₁-68₈ would thus also be drive projections that drive the endless track 22.

In this embodiment, each guide projection 68ₖ is an elastomeric guide projection that comprises elastomeric material 67. The elastomeric material 67 can be any polymeric material with suitable elasticity. More particularly, in this embodiment, the elastomeric material 67 includes rubber. Various rubber compounds may be used and, in some cases, different rubber compounds may be present in different areas of the guide projection 68ₖ. In other embodiments, the elastomeric material 67 may include another elastomer in addition to or instead of rubber (e.g., polyurethane elastomer).

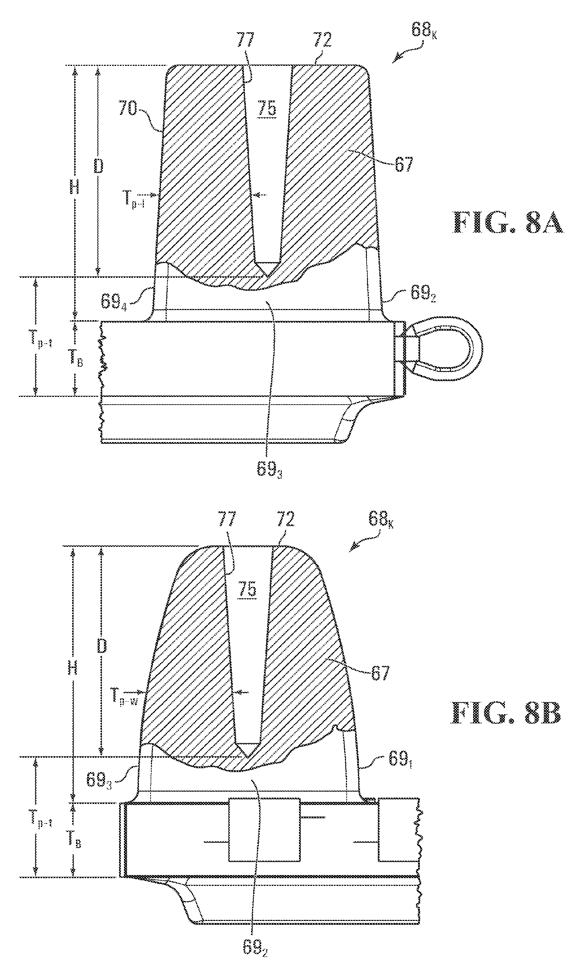

As further discussed below, in this embodiment, the guide projections 68₁-68₈ are designed such that rubber of the track section 50ᵢ, including the rubber 38 of the carcass 36 and the rubber 67 of each guide projection 68ₖ, is efficiently cured (e.g., vulcanized) when the track section 50ᵢ is manufactured, even though the guide projections 68₁-68₈ are more voluminous than other parts of the track section 50ᵢ. In particular, in this example, with additional reference to Figures 8A and 8B, the guide projection 68ₖ is designed such that its rubber 67 and the rubber 38 of the carcass 36 are efficiently cured, even though each of its overall dimensions is significantly greater than (e.g., in this case more than twice) a thickness *T_{b}* of the carcass 36. This can avoid situations where some of the rubber of the track section 50ᵢ would be undesirably undercured or overcured, such as situations where some of the rubber of the track section 50ᵢ would fall short of reaching a desired curing temperature in a given period of time, some of the rubber of the track section 50ᵢ would reach an undesirably high temperature in a given period of time, and/or some of the rubber of the track section 50ᵢ would remain at a high temperature for too long a period of time.

More particularly, in this embodiment, the rubber 67 of each guide projection 68ₖ has an internal surface 77 defining an internal space 75 unoccupied by the rubber 67 to enhance a curing process during manufacturing of the track section 50ᵢ. The internal space 75, which for ease of reading will be referred to as a "cavity", may be shaped in various ways to enhance the curing process.

For example, the cavity 75 may be shaped such that the track section 50ᵢ has a thickness *Tₚ* measured from the internal surface 77 of the rubber 67 of the guide projection 68ₖ in each of one or more directions that is no greater than *N* times the thickness *T_{b}* of the carcass 36 (*Tₚ* ≤ *NT_{b}*), where N is sufficiently small to enhance the curing process. For instance, in some embodiments, N may be no greater than 1.5, in some cases no greater than 1.4, in some cases no greater than 1.3, in some cases no greater than 1.2, in some cases no greater than 1.1, and in some cases equal to or less than 1.0. This may apply to one, in some cases two, and in some cases all three of: a thickness *Tₚ₋ₗ* of the rubber 67 of the guide projection 68ₖ measured from the internal surface 77 in the longitudinal direction of the endless track 22; a thickness *T_{p-w}* of the rubber 67 of the guide projection 68ₖ measured from the internal surface 77 in the widthwise direction of the endless track 22; and a thickness *Tₚ₋ₜ* of the track section 50ᵢ measured from the internal surface 77 in a thickness direction of the endless track 22 (i.e., a direction normal to both the longitudinal direction and the widthwise direction of the endless track 22). In this case, the thickness *Tₚ₋ₜ* is a thickness of the rubber 67 of the guide projection 68ₖ and of the rubber 38 of the carcass 36 measured from the internal surface 77 in the thickness direction of the endless track 22.

Such similar thicknesses can allow heat conduction paths of similar lengths in the rubber 67 of the guide projection 68ₖ and the rubber 38 of the carcass 36 during the curing process. In turn, this can allow the rubber 67 of the guide projection 68ₖ and the rubber 38 of the carcass 36 to exhibit respective temperature profiles tending to match one another over time during the curing process.

In this embodiment, the cavity 75 extends inwardly from the periphery 70 of the guide projection 68ₖ. More particularly, in this example, the cavity 75 extends generally vertically from the top surface 72 of the guide projection 68ₖ. The cavity 75 has a depth D which may take on various values depending on the dimensions of the guide projection 68ₖ. For instance, in some examples, a ratio D/H of the depth D of the cavity 75 to a height H of the guide projection 68ₖ may be at least 25%, in some cases at least 30%, in some cases at least 35%, in some cases at least 40%, in some cases at least 45%, and in some cases at least 50%. In this example, the depth D is about 80% of the height H of the guide projection 68ₖ.

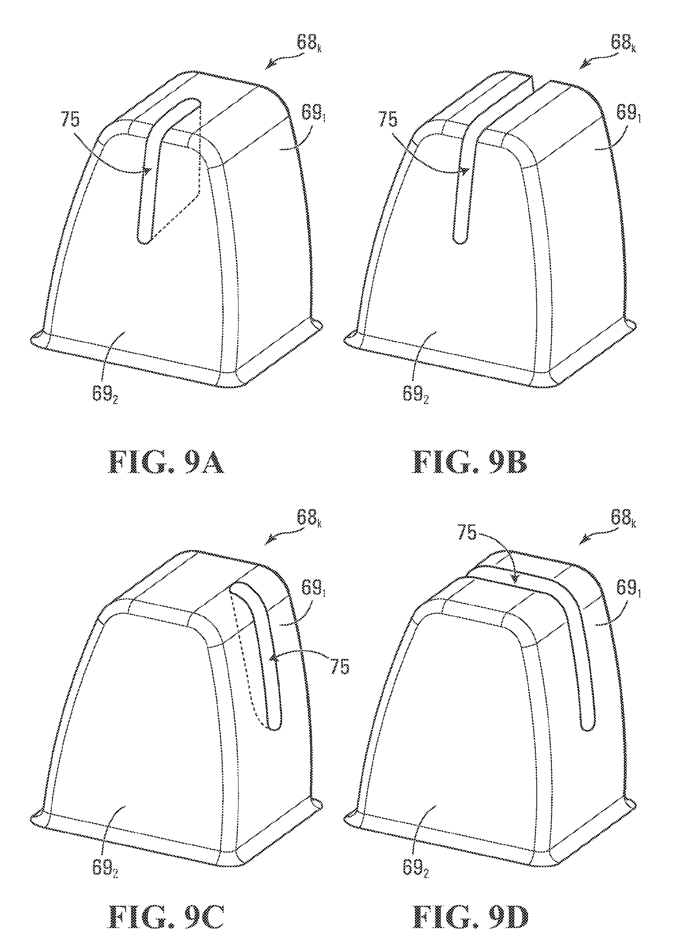

The cavity 75 may be configured in various other ways in other embodiments. For example, in other embodiments, the cavity 75 may be oriented or shaped differently (e.g., as a recess or slot) and/or may extend from another region of the periphery 70 of the guide projection 68ₖ (e.g., from one of its side surfaces 69₁-69₄) or from a region of the track section 50ᵢ other than the periphery 70 of the guide projection 68ₖ (e.g., through a portion of the carcass 36 adjacent the guide projection 68ₖ). Figures 9A to 9D show examples of other configurations of the cavity 75 in other embodiments.

As further discussed later on, in addition to reducing a quantity of rubber to be cured, in this embodiment, the cavity 75 of each guide projection 68ₖ allows heat from a heat source to be conducted inside the guide projection 68ₖ during the curing process. Specifically, the cavity 75 is shaped such that, during the curing process, a heat conductor located in the cavity 75 is heated and transfers heat by conduction to the rubber 67 via the internal surface 77 of the rubber 67. The heat conductor may comprise any metallic or other solid object that can transfer heat by conduction to the rubber 67 of the guide projection 68ₖ via the internal surface 77 of the rubber 67.

In order to facilitate installation of the endless track 22 on the construction vehicle 10 and/or facilitate replacement or repair of one or more of the track sections 50₁-50₁₀, in this embodiment, each track section 50ᵢ is liftable and manipulable by a single person. That is, the track section 50ⱼ has a weight and overall dimensions such that a single person can lift and manipulate the track section 50ⱼ to install or remove it from the track assembly 16ⱼ. For example, in some embodiments, the weight of the track section 50ᵢ may be no more than 150 Ibs, in some cases no more than 125 Ibs, in some cases no more than 100 Ibs, and in some cases no more than 75 Ibs. The weight of the track section 50ᵢ may take on various other values in other embodiments. As another example, in some embodiments, each of a length and a width of the track section 50ᵢ may be no more than 3 ft, in some cases no more than 2.5 ft, and in some cases no more than 2 ft. The length and width of the track section 50ᵢ may take on various other values in other embodiments.

The connector 56₁ connects the track section 50ᵢ to the track section 52ᵢ₊₁ at the joint 48ⱼ₊₁ and the connector 56₂ connects the track section 50ᵢ to the track section 52ᵢ₋₁ at the joint 48ⱼ.

More particularly, at the joint 48ⱼ, the connector 56₂ of the track section 50ᵢ cooperates with the connector 56₁ of the track section 52ᵢ₋₁ to allow the track section 50ᵢ to move relative to the track section 52ᵢ₋₁ when the endless track 22 is driven by the drive wheels 24₁, 24₂. In this embodiment, the joint 48ᵢ comprises an elongated interlinking member 71 that interlinks the connector 56₂ of the track section 50ᵢ and the connector 56₁ of the track section 52ᵢ₋₁ to allow the track section 50ᵢ and the track section 52ᵢ₋₁ to hingedly move relative to one another as the endless track 22 is driven by the drive wheels 24₁, 24₂. In other words, in this case, the elongated interlinking member 71 acts as a pin and the joint 48ᵢ is basically a hinge joint. This motion enables a change in longitudinal curvature (i.e., curvature along the longitudinal direction of the endless track 22) of a portion of the endless track 22 which is made up of the track sections 50ᵢ, 52ᵢ₋₁ as it goes around the drive wheels 24₁, 24₂.

In addition, in this embodiment, as further discussed below, the connector 56₂ of the track section 50ᵢ, the connector 56₁ of the track section 52ᵢ₋₁, and the elongated interlinking member 71 allow the joint 48ⱼ to be flexible in a transversal direction of the endless track 22, namely in this case the widthwise direction of the endless track 22. This lateral flexibility of the joint 48ⱼ reduces stress in the joint 48ᵢ in operation, amongst other benefits.

At the joint 48ⱼ₊₁, the connector 56₁ of the track section 50ᵢ, the connector 56₂ of the track section 52ᵢ₊₁, and the elongated interlinking member 71 at the joint 48ᵢ₊₁ cooperate in a manner similar to that discussed above in respect of the joint 48ⱼ.

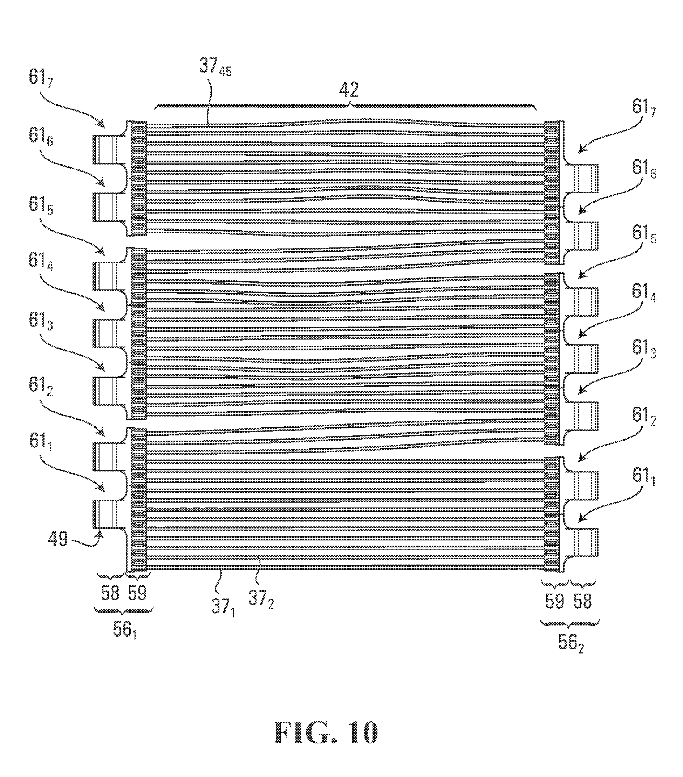

With additional reference to Figure 10, each of the connectors 56₁, 56₂ comprises an anchoring portion 59 and a connecting portion 58. The anchoring portion 59 of the connector 56₁ is embedded in the rubber 38 of the carcass 36 and anchors the connector 56₁ to the carcass 36, while the connecting portion 58 of the connector 56₁ lies outside the carcass 36 to be connected to the connecting portion 58 of the connector 56₂ of the track section 50ᵢ₊₁. Similarly, the anchoring portion 59 of the connector 56₂ is embedded in the rubber 38 of the carcass 36 and anchors the connector 56₂ to the carcass 36, while the connecting portion 58 of the connector 56₂ lies outside the carcass 36 to be connected to the connecting portion 58 of the connector 56₁ of the track section 50ᵢ₋₁.

The connectors 56₁, 56₂ may be configured in various ways. In this embodiment, each of the connectors 56₁, 56₂ comprises a plurality of connection members 61₁-61₇ separate from one another and disposed adjacent to one another.

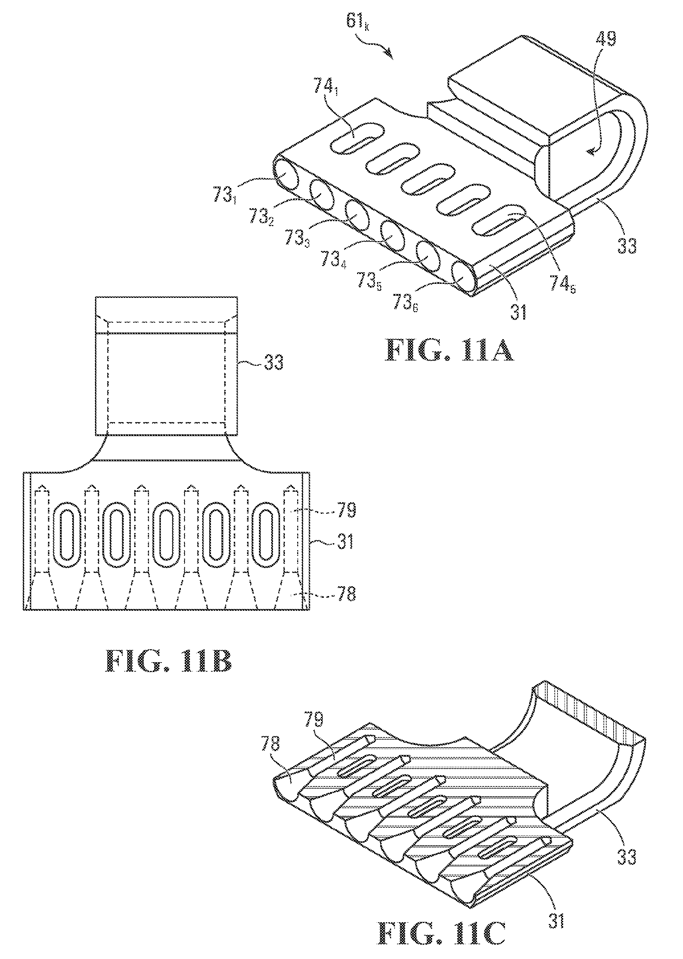

As shown in Figures 11A to 11C, each connection member 61ₖ of the connector 56₂ comprises an anchoring part 31 and a connecting part 33. The anchoring part 31 is embedded in the rubber 38 of the carcass 36 and anchors the connection member 61ₖ to the carcass 36, while the connecting part 33 lies outside the carcass 36 to be connected to the connecting portion 58 of the connector 56₁ of the track section 50ᵢ₋₁. Thus, the anchoring parts 31 of the connection members 61₁-61₇ of the connector 56₂ collectively constitute the anchoring portion 59 of the connector 56₂, while the connecting parts 33 of the connection members 61₁-61₇ of the connector 56₂ collectively constitute the connecting portion 58 of the connector 56₂.

The connection members 61₁-61₇ of the connector 56₂ may be constructed in various manners. In this embodiment, each of the connection members 61₁-61₇ is made of metal (e.g., steel) that has been machined into shape. Also, the anchoring part 31 of each of the connection members 61₁-61₇ may include a layer of elastomeric material (e.g., rubber) adhered to the metal (e.g., using a suitable rubber-to-metal adhesive). In other embodiments, the connection members 61₁-61₇ may be made using various other materials (e.g., plastics, composites, etc.) and/or various other processes (e.g., casting, forging, welding, etc.).

Each of the connection members 61₁-61₇ of the connector 56₂ is coupled to a subset of the reinforcing cables 37₁-37₄₅. Specifically, in this example: the connection member 61₁ is coupled to the reinforcing cables 37₁-37₆; the connection member 61₂ is coupled to the reinforcing cables 37₇-37₁₂; the connection member 61₃ is coupled to the reinforcing cables 37₁₃-37₁₈; the connection member 61₄ is coupled to the reinforcing cables 37₁₉-37₂₄; the connection member 61₅ is coupled to the reinforcing cables 37₂₅-37₃₀; the connection member 61₆ is coupled to the reinforcing cables 37₃₁-37₃₆; and the connection member 61₇ is coupled to the reinforcing cables 37₃₇-37₄₅.

The reinforcing cables 37₁-37₄₅ may be coupled to the connection members 61₁-61₇ of the connector 56₂ in various manners. In this embodiment, the anchoring part 31 of each connection member 61ₖ crimps ends of respective ones of the reinforcing cables 37₁-37₄₅ that are coupled to the connection member 61ₖ. More particularly, in this embodiment, the anchoring part 31 of the connection member 61₁ comprises a plurality of cable ports 73₁-73₆ to receive respective ones of the reinforcing cables 37₁-37₆. Each of the cable ports 73₁-73₆ has an entry opening 78 and an internal channel 79 through and into which a respective one of the reinforcing cables 37₁-37₆ extends. Once the ends of the reinforcing cables 37₁-37₆ are inserted therein, the cable ports 73₁-73₆ are crimped on the reinforcing cables 37₁-37₆ to secure them in place. Adjacent ones of the cable ports 73₁-73₆ define openings 74₁-75₅ which provide space for deformation of the cable ports 73₁-73₆ during the crimping operation. In this case, the entry opening 78 of each cable port 73ⱼ has a cross-sectional dimension that is larger than a cross-sectional dimension of the internal channel 79 of the cable port 73ᵢ. This can help to reduce stress. The anchoring parts 31 of the connection members 61₂-61₇ are similarly configured.

The reinforcing cables 37₁-374₅ may be secured to the connection members 61₁-61₇ of the connector 56₂ in other ways in other embodiments. For example, in some embodiments, the reinforcing cables 37₁-37₄₅ may be welded to the connection members 61₁-61₇ and/or may comprise enlargements (e.g., ball fittings or ball-and-shank fittings) at their ends to improve their retention.

Since in this embodiment the reinforcing cables 37₁-37₄₅ generally lie in a common plane, the track section 50ᵢ has a stable neutral axis, which separates a region of the track section 50ᵢ under compression from a region of the track section 50ᵢ under tension when the track section 50ᵢ bends in use.

The connecting part 33 of each of the connection members 61₁-61₇ of the connector 56₂ defines an opening 49 to receive the elongated interlinking member 71. At the joint 48ⱼ, the connecting parts 33 of the connection members 61₁-61₇ of the connector 56₂ of the track section 50ᵢ are aligned and interlaced with the connecting parts 33 of the connection members 61₁-61₇ of the connector 56₁ of the track section 50_{i-1.} The elongated interlinking member 71 is received in the opening 49 defined by each of these connecting parts 33 to interlink the connector 56₂ of the track section 50ᵢ and the connector 56₁ of the track section 50ᵢ₋₁.

As they are independent from one another, the connection members 61₁-61₇ of the connector 56₂ are movable relative to one another to impart lateral flexibility to the joint 48ⱼ.

To contribute to this lateral flexibility, in this embodiment, the elongated interlinking member 71 of the joint 48ᵢ is flexible. In that sense, the elongated interlinking member 71, which acts as a pin, can be viewed as a "flexible pin" allowing the joint 48ᵢ to flex in the lateral direction of the endless track 22.

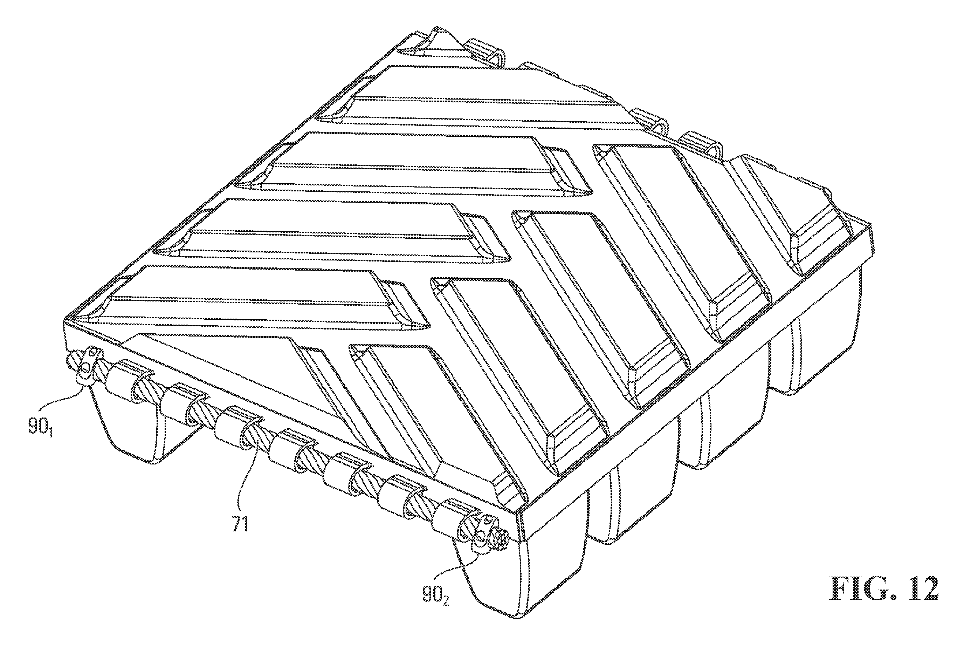

More particularly, in this embodiment, as shown in Figure 12, the elongated interlinking member 71 comprises a flexible cable which allows the joint 48ᵢ to flex in the widthwise direction of the endless track 22. The flexible cable has a shear strength that is sufficient to withstand the shear forces exerted on it by the connector 56₂ of the track section 50ᵢ and the connector 56₁ of the track section 52ᵢ₋₁. For example, in this case, the flexible cable comprises a wire rope including a plurality of metallic wires (e.g., a 7x19 galvanized cable). In other cases, the flexible cable may be another type of cable and may be made of any material suitably flexible (e.g., fibers or wires of metal, plastic or composite material), possibly covered by a layer of elastomeric material (e.g., rubber). End fittings 90₁, 90₂ may be mounted to the elongated interlinking member 71 to further ensure it does not move out of the connectors 56₁, 56₂.

The elongated interlinking member 71 may take on other forms in other embodiments. For example, in some embodiments, the elongated flexible member 71 may comprise a flexible rod, which may be made of suitable metal, polymer or composite material (e.g., fiberglass, Kevlar^{™}, etc.).

The connection members 61₁-61₇ of the connector 56₁ of track section 50ᵢ are configured in a manner similar to the connection members 61₁-61₇ of the connector 56₂ of the track section 50ᵢ. Thus, with the elongated interlinking member 71 of the joint 48ⱼ₊₁ being flexible, the connection members 61₁-61₇ of the connector 56₁ allow the joint 48ⱼ₊₁ to be flexible in the widthwise direction of the endless track 22.

The lateral flexibility of each of the joints 48ⱼ, 48ⱼ₊₁ has several benefits. For example, the lateral flexibility may reduce stress in the joints 48ⱼ, 48ⱼ₊₁ and allow them to elastically deform in operation (e.g., when the track 22 encounters an obstacle on the ground). This may help to avoid permanent deformation of the 48ⱼ, 48ⱼ₊₁ and reduce wear of the joints 48ⱼ, 48ⱼ₊₁, thus maintaining the performance of the endless track 22 over time. The lateral flexibility may also allow the track sections 50₁-50₁₀ and thus the endless track 22 to be wider than tracks having laterally-rigid joints.

The reinforcing cables 37₁-37₄₅ are coupled to the connection members 61₁-61₇ of the connector 56₁ and those of the connector 56₂. In this embodiment, the reinforcing cables 37₁-37₄₅ are arranged such that: each of the connection members 61₁-61₆ of the connector 56₁ is coupled to respective ones of the reinforcing cables 37₁-37₄₅ that are coupled to adjacent ones of the connection members 61₁-61₇ of the connector 56₂; and each of the connection members 61₂-61₇ of the connector 56₂ is coupled to respective ones of the reinforcing cables 37₁-37₄₅ that are coupled to adjacent ones of the connection members 61₁-61₇ of the connector 56₁. Specifically, in this example: the connection member 61₁ of the connector 56₁ is coupled to the reinforcing cables 37₁-37₉ that are coupled to the connection members 61₁, 61₂ of the connector 56₂; the connection member 61₂ of the connector 56₁ is coupled to the reinforcing cables 37₁₀-37₁₅ that are coupled to the connection members 61₂, 61₃ of the connector 56₂; and so on. This allows a certain degree of lateral "continuity" even though the connection members 61₁-61₇ of each of the connectors 56₁, 56₂ are separate from one another.

Although the track section 50ᵢ is configured in a particular way in this embodiment, it may comprise various other components and/or be made using various other materials in other embodiments.

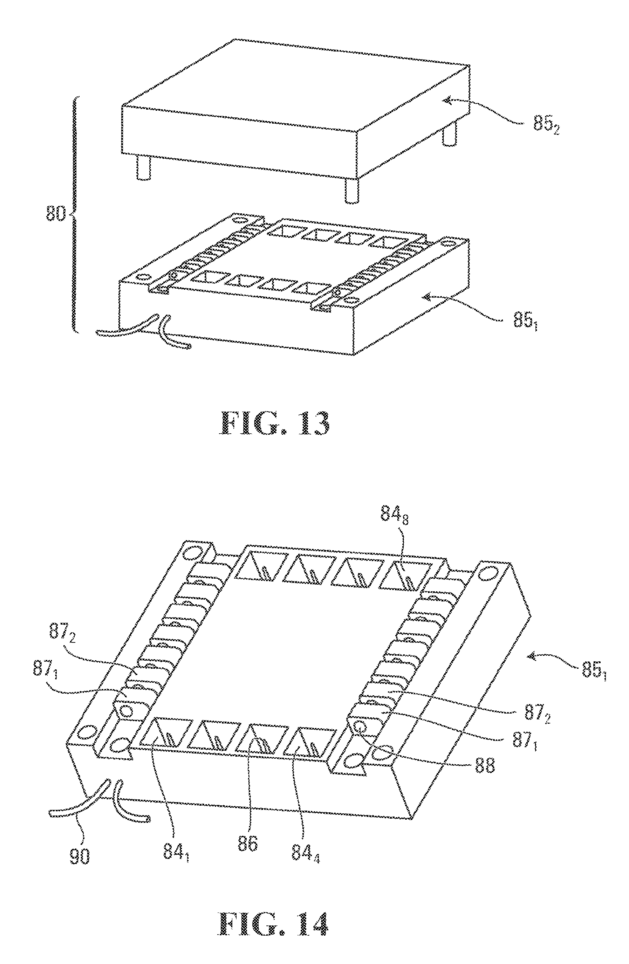

With reference to Figures 13 and 14, an example of a process for manufacturing the track section 50ᵢ will be discussed. In this example, the track section 50ᵢ is manufactured by molding it in a mold 80.

The guide projections 68₁-68₈ are prepared for the molding operation. More particularly, in this example, the rubber 67 of each guide projection 68ₖ is molded in a suitably-shaped mold to form the guide projection 68ₖ. The cavity 75 may be molded at the same time in this mold or may be formed afterwards (e.g., by drilling it in the guide projection 68ₖ).

The guide projections 68₁-68₃ are then placed in the mold 80. More particularly, in this example, the guide projections 68₁-68₈ are placed in respective cavities 84₁-84₈ of a first part 85₁ of the mold 80. Each cavity 84ₖ has a heat conductor 86 projecting therein and received in the cavity 75 of the guide projection 68ₖ. During a curing process discussed below, the heat conductor 86 is heated and transfers heat by conduction to the rubber 67 of the guide projection 68ₖ via its internal surface 77.

The carcass 36 of the track section 50ᵢ is provided in the mold 80. More particularly, in this example, the rubber 38, the connectors 56₁, 56₂, and the reinforcements 42, 43, 44, 47 are assembled. The rubber 38 and the reinforcements 43, 44, 47 are provided by layering a plurality of sheets on one another. These sheets include sheets of rubber and sheets of reinforcing fabric and/or reinforcing cables. In some cases, each sheet of reinforcing fabric or reinforcing cables may include rubber in which is embedded the reinforcing fabric or reinforcing cables. The sheets used to make the carcass 36 may have been previously produced using various processes (e.g., calendering). Collectively, the sheets of rubber and, if present, the rubber of the sheets of reinforcing fabric and/or reinforcing cables will, upon curing, form part of the rubber 38 of the carcass 36.

The connectors 56₁, 56₂ are coupled to the reinforcement 42. More particularly, in this embodiment, the reinforcing cables 37₁-37₄₅ are coupled to the connection members 61₁-61₇ of each of the connectors 56₁, 56₂ by being crimped by these connection members, as described previously. The connectors 56₁, 56₂ and the reinforcing cables 37₁-37₄₅ coupled thereto are placed between some of the sheets used to make the carcass 36.

In this case, the connecting parts 33 of the connection members 61₁-61₇ of the connectors 56₁, 56₂ are positioned between respective guides 87₁-87₇ on each side of the mold 80. Each of the guides 87₁-87₇ defines an opening 88 aligning with the opening 49 of the connecting part 33.

The traction projections 57₁-57₁₁ are prepared for the molding operation. More particularly, in this example, the rubber 41 of the traction projections 57₁-57₁₁ of the tread pattern 55 is placed into the mold 80.

The mold 80 is then closed by moving its first part 85₁ and a second part 85₂ thereof towards one another. Heat and pressure are applied to the mold 80 to consolidate the components of the track section 50ᵢ inside the mold 80, including curing their rubber. More particularly, in this embodiment, the mold 80 is heated by injecting high-temperature steam via conduits 90 linked to the mold 80. Pressure is applied by pressing the first and second parts 85₁, 85₂ of the mold 80 on one another using a press (e.g., a hydraulic press). The mold 80 may be heated to various temperatures and may be subjected to various levels of pressure, depending on the material properties and desired performance characteristics of the endless track 22.

The rubber of the track section 50ᵢ that is in the mold 80 undergoes a curing process due to the heat applied to the mold 80. As part of this curing process, the heat conductor 86 received in the cavity 75 of each guide projection 68ₖ is heated. In this example, the heat conductor 86 received in the cavity 75 of each guide projection 68ₖ is heated by the high-temperature steam in the conduits 90. For instance, a conduit may run inside the heat conductor 86 to heat it and/or the heat conductor 86 may be heated by conduction of heat from a contiguous heated part of the mold 80 from which it projects. The heat conductor 86 transfers heat by conduction to the rubber 67 of the guide projection 68ₖ via its internal surface 77. This helps to efficiently cure the rubber of the track section 50ᵢ, including the rubber 67 of each of the guide projections 68₁-68₈ and the rubber 38 of the carcass 36, even though the guide projections 68₁-68₈ are more voluminous than the carcass 36.

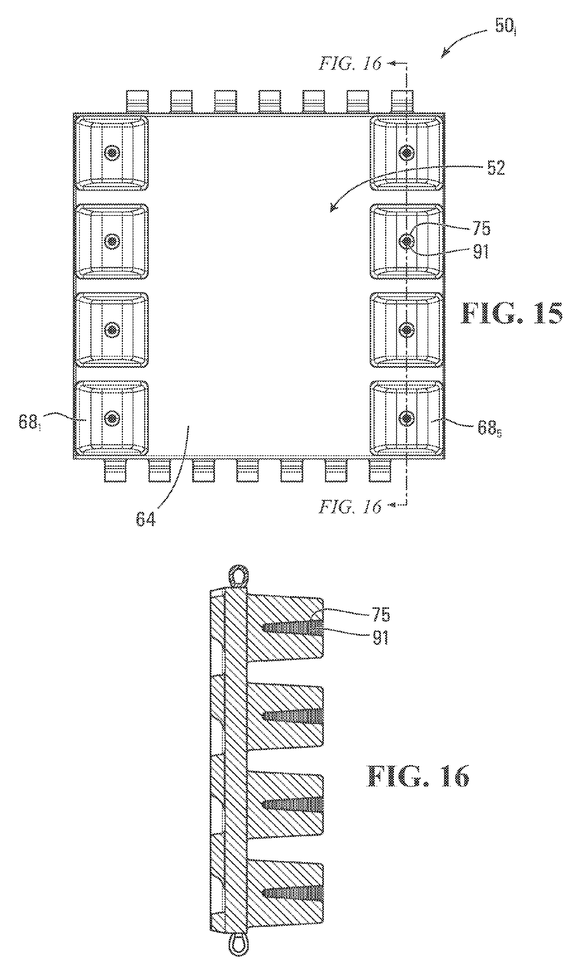

Instead of using the heat conductor 86 that is part of the mold 80, in other embodiments, as shown in Figures 15 and 16, each guide projection 68ₖ may comprise a heat conductor 91 positioned in the cavity 75 of the guide projection 68ₖ prior to the guide projection 68ₖ being placed in the mold 80. The heat conductor 91 may be a metallic part (e.g., a metallic pin or other part) or some other component made of material having suitable heat conductivity. For instance, the heat conductor 91 may be placed in the cavity 75 after the cavity 75 is formed (e.g., by molding or drilling) in the guide projection 68ₖ. Alternatively, the heat conductor 91 may be present while the cavity 75 is being formed (e.g., the rubber 67 of the guide projection 68ₖ may be molded around the heat conductor 91 when the guide projection 68ₖ is formed, in which case the heat conductor 91 actually forms the cavity 75 in which it is located). During the track section molding operation, the heat conductor 91 is heated by heat conducted in the mold 80. For example, the heat conductor 91 may be in contact with a heated part of the mold 80 (e.g., a metallic heated part of the mold 80) that transfers heat to it by conduction. As it is heated, the heat conductor 91 transfers heat by conduction to the rubber 67 of the guide projection 68ₖ via its internal surface 77. Upon completion of the curing process and removal of the track section 50ᵢ from the mold 80, the heat conductor 91 may remain in the guide projection 68ₖ as part of the endless track 22 in use. In some embodiments, in addition to enhancing curing of the rubber 67 of the guide projection 68ₖ, the heat conductor 91 may act as a structural reinforcement that reinforces the guide projection 68ₖ. Alternatively, upon completion of the curing process and removal of the track section 50ᵢ from the mold 80, the heat conductor 91 may be removed from the guide projection 68ₖ so that it is not part of the endless track 22 in use.

Upon allowing sufficient time for consolidation of the carcass 36, the guide projections 68₁-68₈, and the traction projections 57₁-57₁₁, including curing their rubber, the mold 80 is opened and the track section 50ᵢ removed therefrom. One or more additional operations (e.g., trimming) may then be performed on the track section 50ᵢ to put it in its final state.

Although this example illustrates one possible process to make the track sections 50₁-50₁₀, the track sections 50₁-50₁₀ may be made using various other processes in other embodiments.

It will thus be appreciated that, in this embodiment, the track sections 50₁-50₁₀ allow the endless track 22 to be conveniently installed on the construction vehicle 10 and/or can facilitate replacement or repair of one or more of its sections. Also, since the joints 48₁-48₁₀ of the endless track 22 are flexible in the widthwise direction of the endless track 22, the performance of the endless track 22 is improved.

The endless track 22 may be configured in various other ways in other embodiments.

For example, while in this embodiment the endless track 22 comprises ten (10) track sections 50₁-50₁₀, the endless track 22 may comprise any number of track sections in other embodiments, depending on overall dimensions of the track assembly 16ᵢ. For instance, in some embodiments, the track 22 may comprise at least three track sections, in some cases at least four track sections, and in some cases at least five track sections such as the track sections 50₁-5010. Also, while in this embodiment the track sections 50₁-50₁₀ have the same length, different ones of the track sections 50₁-50₁₀ may have different lengths in other embodiments.

As another example, although in this embodiment there is a single elongated interlinking member 71 at each joint 48ᵢ thus forming a "single-pin" joint, there may be more than one elongated interlinking member 71 at each joint 48ᵢ (e.g., two elongated interlinking members forming a "double-pin" joint).

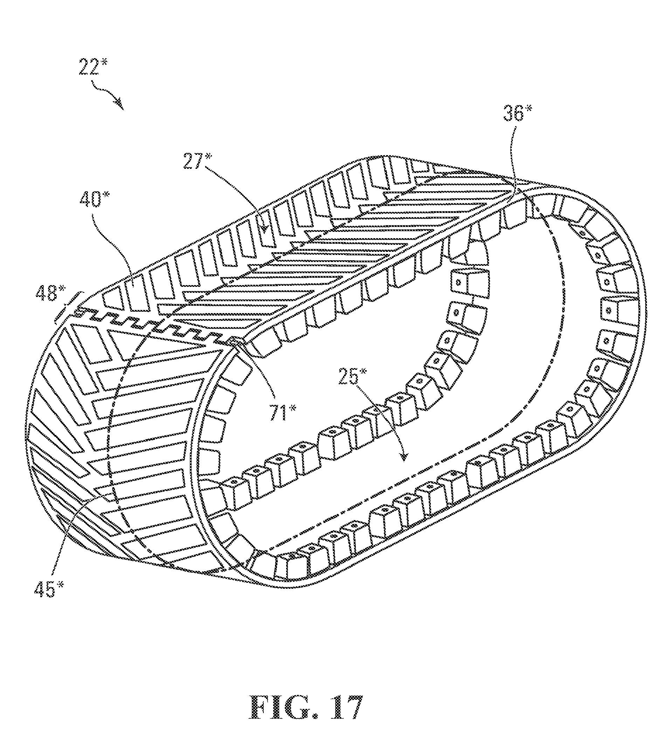

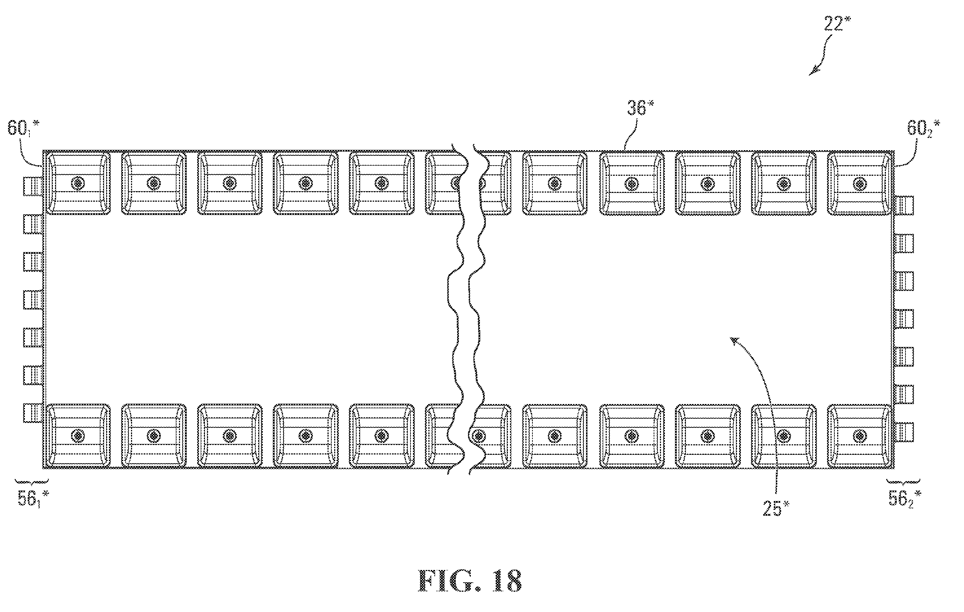

As yet another example, while in this embodiment the endless track 22 is a segmented track made up of a plurality of track sections, in other embodiments, the endless track 22 may be a "one-piece" track that can be closed like a belt. For instance, Figures 17 and 18 show an embodiment of an endless track 22* comprising a carcass 36* and connectors 56₁*, 56₂* at front and rear edges 60₁*, 60₂*. The connectors 56₁*, 56₂* are interconnectable at a joint 48* when the endless track 22* is closed, as shown in Figure 17. In this case, the connectors 56₁*, 56₂* are interconnected via an elongated interlinking member 71*. Basically, in this example, the endless track 22* can be viewed as a longer version of a single track section such as the track sections 50₁-50₁₀, with the carcass 36* and the connectors 56₁*, 56₂* being structurally and functionally similar to the carcass 36 and the connectors 56₁, 56₂ of one of the track sections 50₁-50₁₀ and with the elongated interlinking member 71* being structurally and functionally similar to the elongated interlinking member 71 at one of the joints 48₁-48₁₀. Accordingly, in this example, the connectors 56₁*, 56₂* and the elongated interlinking member 71* allow the joint 48* to be flexible in a lateral direction of the endless track 22*.

As yet another example, although in this embodiment the endless track 22 is an OTT track installable over the drive wheels 24₁, 24₂ to convert the construction vehicle 10 into a tracked vehicle, the endless track 22 may not be such an OTT track in other embodiments.

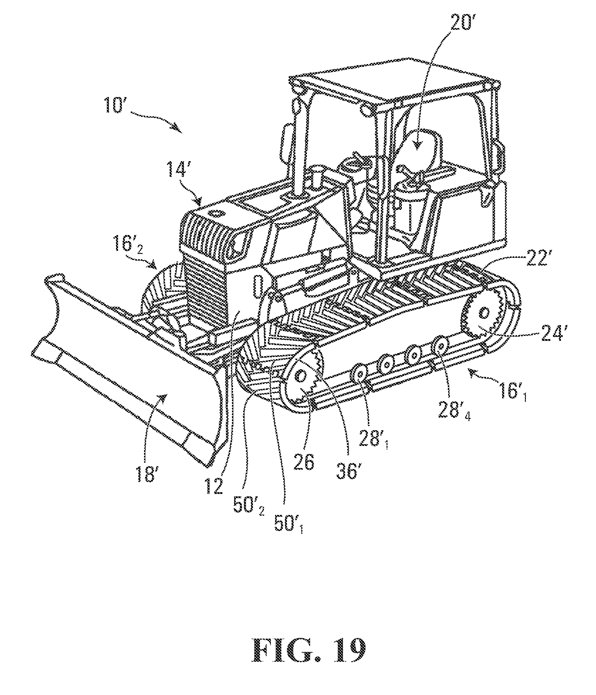

For instance, Figure 19 shows an embodiment of a construction vehicle 10' comprising two (2) track assemblies 16₁', 16₂'. Each track assembly 16ᵢ' comprises a drive wheel 24', an idler wheel 26', a plurality of roller wheels 28₁'-28_{R}', and an endless track 22' comprising a plurality of track sections 50₁'-50₁₀' configured according to principles discussed herein.

Motion of the endless track 22' is imparted by the drive wheel 24' which is rotated using power produced by a prime mover 14' of the construction vehicle 10'. For example, in some embodiments, the drive wheel 24' may be a drive sprocket and each of the track sections 50₁'-50₁₀' may comprise one or more recesses or openings which receive teeth of the drive sprocket in order to drive the endless track 22'. In other embodiments, the inner side 25' of each of the track sections 50₁'-50₁₀' may comprise drive projections that engage the drive wheel 24' in order to cause the endless track 22' to be driven. These drive projections may also serve to guide the endless track 22 around the wheels 24', 26', 28₁'-28_{R}'. In cases where these drive projections are more voluminous than a carcass 36' of each of the track sections 50₁'-50₁₀', each of the drive projections may comprise a cavity to provide a heat conduction path for conducting heat inside the drive projection during curing of the track section, as discussed previously in respect of the cavity 75 of each of the guide projections 68₁-68₈. In yet other embodiments, the inner side 25' of each of the track sections 50₁'-50₁₀' may frictionally engage the drive wheel 24' to cause the endless track 22' to be frictionally driven.

The idler wheel 26' and the roller wheels 28₁'-28_{R}' do not convert power supplied by the prime mover 14' of the construction vehicle 10' to motive force, but rather guide the endless track 22' and/or maintain it under tension as it is driven by the drive wheel 24'. Also, the roller wheels 28₁'-28_{R}' support and distribute part of the weight of the construction vehicle 10' on the ground via the endless track 22'.

While in embodiments considered above the vehicle 10 is a construction vehicle for performing construction work, in other embodiments, the vehicle 10 may be an agricultural vehicle (e.g., a harvester, a combine, a tractor, etc.) for performing agricultural work, a forestry vehicle (e.g., a feller-buncher, a tree chipper, a knuckleboom loader, etc.) for performing forestry work, a military vehicle (e.g., a combat engineering vehicle (CEV), etc.) for performing work in a military application, a transporter vehicle (e.g., a heavy hauler, a flatbed truck, a trailer, a carrier, etc.) for transporting equipment, materials, cargo or other objects, or any other vehicle operable off paved roads. Although it is operable off paved roads, particularly with its track assemblies, the vehicle 10 may also be operable on paved roads (e.g., in some cases, the vehicle 10 may be intended to operate on paved roads most of the time and intended to operate off-road only in some situations). Also, while in embodiments considered above the vehicle 10 is driven by a human operator in the vehicle 10, in other embodiments, the vehicle 10 may be an unmanned ground vehicle (e.g., a teleoperated or autonomous unmanned ground vehicle).

Although various embodiments and examples have been presented, this was for the purpose of describing, but not limiting, the invention. Various modifications and enhancements will become apparent to those of ordinary skill in the art and are within the scope of the invention, which is defined by the appended claims.

## Claims

1. An endless track for traction of a vehicle, the vehicle comprising a plurality of wheels, the endless track comprising a plurality of track sections connected to one another, each track section comprising:
a) a body having an inner side for facing the wheels and a ground-engaging outer side for engaging the ground; and
b) a connector for connecting the track section to an adjacent one of the track sections at a joint, the joint being flexible in a widthwise direction of the endless track.

2. The endless track claimed in claim 1, wherein the connector comprises at least one opening for receiving an elongated interlinking member that interlinks the connector and the adjacent one of the track sections, the elongated interlinking member allowing the track section and the adjacent one of the track sections to hingedly move relative to one another, the elongated interlinking member being flexible in the widthwise direction of the endless track.

3. The endless track claimed in claim 2, wherein the elongated interlinking member comprises a cable.

4. The endless track claimed in any one of claims 1 to 3, wherein the body comprises elastomeric material and a reinforcement embedded in the elastomeric material, the connector being coupled to the reinforcement.

5. The endless track claimed in claim 4, wherein the reinforcement is a plurality of reinforcing cables adjacent to one another and extending in a longitudinal direction of the endless track.

6. The endless track claimed in claim 5, wherein the connector crimps the reinforcing cables.

7. The endless track claimed in any one of claims 5 and 6, wherein the reinforcing cables are welded to the connector.

8. The endless track claimed in any one of claims 5 to 7, wherein the connector comprises a plurality of cable ports, each cable port having an entry opening and an internal channel into which a respective one of the reinforcing cables extends.

9. The endless track claimed in claim 8, wherein adjacent ones of the cable ports define openings.

10. The endless track claimed in any one of claims 1 to 7, wherein the connector comprises a plurality of connection members separate from one another and disposed adjacent to one another.

11. The endless track claimed in claim 10, wherein the body comprises elastomeric material and a reinforcement embedded in the elastomeric material, each connection member being coupled to the reinforcement.

12. The endless track claimed in claim 11, wherein the reinforcement is a plurality of reinforcing cables adjacent to one another and extending in a longitudinal direction of the endless track, each connection member being coupled to more than one of the reinforcing cables.

13. The endless track claimed in any one of claims 1 to 7, wherein the connector is a first connector, the adjacent one of the track sections is a first adjacent one of the track sections, and the joint is a first joint, the track section comprising a second connector for connecting the track section to a second adjacent one of the track sections at a second joint, the second joint being flexible in the widthwise direction of the endless track.

14. The endless track claimed in claim 13, wherein the first connector comprises a first plurality of connection members separate from one another and disposed adjacent to one another, and the second connector comprises a second plurality of connection members separate from one another and disposed adjacent to one another.

15. The endless track claimed in claim 14, wherein the body comprises elastomeric material and a plurality of reinforcing cables embedded in the elastomeric material, the reinforcing cables being adjacent to one another and extending in a longitudinal direction of the endless track, the reinforcing cables being arranged such that: a given one the connection members of the first connector is coupled to respective ones of the reinforcing cables that are coupled to at least two of the connection members of the second connector; and a given one of the connection members of the second connector is coupled to respective ones of the reinforcing cables that are coupled to at least two of the connection members of the first connector.

16. The endless track claimed in any one of claims 1 to 15, wherein the track section comprises a plurality of wheel-contacting projections on the inner side for contacting at least one of the wheels, the wheel-contacting projections being spaced apart in a longitudinal direction of the endless track.

17. The endless track claimed in any one of claims 1 to 16, wherein the track section is liftable and manipulable by a single person.

18. An endless track for traction of a vehicle, the vehicle comprising a plurality of wheels, each of the wheels having a tire, the endless track being mountable over the tire of each of the wheels, the endless track comprising a plurality of track sections connected to one another, each track section comprising:
a) an elastomeric body having an inner side for facing the wheels and a ground-engaging outer side for engaging the ground;
b) a plurality of elastomeric wheel-contacting projections on the inner side for contacting at least one of the wheels, the elastomeric wheel-contacting projections being spaced apart in a longitudinal direction of the endless track; and
c) a connector for connecting the track section to an adjacent one of the track sections at a joint.

19. An endless track for traction of a vehicle, the vehicle comprising a plurality of wheels, the endless track comprising a plurality of track sections connected to one another, each track section comprising:
a) an elastomeric body having an inner side for facing the wheels and a ground-engaging outer side for engaging the ground;
b) a plurality of elastomeric wheel-contacting projections on the inner side for contacting at least one of the wheels, the elastomeric wheel-contacting projections being spaced apart in a longitudinal direction of the endless track; and
c) a connector for connecting the track section to an adjacent one of the track sections at a joint.
